# EUROPÄISCHE PATENTSCHRIFT

(11) **EP 0 582 838 B1**
(45) Veröffentlichungstag und Bekanntmachung des Hinweises auf die Patenterteilung: **04.12.1996**
(21) Anmeldenummer: 93111074.6
(22) Anmeldetag: 10.07.1993
(51) Int. Cl.: B60N 3/10

(54) **Haltevorrichtung für Getränkebehälter**
Holder for beverage receptacle
Dispositif de support d'un réceptacle de boissons

(30) Priorität: 25.07.1992 DE 4224700
(43) Veröffentlichungstag der Anmeldung: 16.02.1994
(73) Patentinhaber: EUWE EUGEN WEXLER GmbH, D-91207 Lauf (DE)
(72) Erfinder: Lehner, Heinz, D-91207 Lauf (DE)
(74) Vertreter: Hübner, Gerd, Dipl.-Phys.

(56) Entgegenhaltungen:
- EP-A- 0 447 263
- WO-A-84/04072
- DE-A- 3 942 629
- US-A- 3 817 190
- US-A- 5 072 909
- PATENT ABSTRACTS OF JAPAN & JP-A-50 008 679 (KOUGIYOU) 19. Januar 1993
- PATENT ABSTRACTS OF JAPAN & JP-A-50 08 679 (KOUGIYOU) 19. Januar 1993

## Beschreibung

Die Erfindung betrifft eine Haltevorrichtung für Getränkebehälter nach dem Oberbegriff des Patentanspruches 1.

Derartige Haltevorrichtungen für Getränkebehälter, die insbesondere zur Anbringung in Fahrzeugen bestimmt sind, sind seit langem bekannt. Da solche Haltevorrichtungen nur zeitweise gebraucht werden, z.B. wenn während der Fahrt ein Getränk eingenommen werden soll, ansonsten aber nur stören und aufgrund ihrer abstehenden Teile sicherheitstechnisch nicht unbedenklich sind, sind sie in der Regel einklappbar. Dazu ist sowohl der an der Befestigungskonsole schwenkbar gelagerte Träger zur Aufnahme des Bodens eines Getränkebehälters als auch der ebenfalls an der Konsole schwenkbar gelagerte Halter zum Umfassen der Seitenwand des Getränkebehälters zwischen einer eingeklappten und einer ausgeklappten Schwenkstellung schwenkbar. Um der Haltevorrichtung in geschlossenem Zustand ein möglichst glattflächiges Äußeres zu geben, wird zuerst der im wesentlichen teilringförmige Halter eingeklappt, worüber anschließend der mit einem glattflächigen Boden versehene Träger deckelartig geklappt werden kann. Zusammen mit der im wesentlichen als offener, flacher Kasten ausgebildeten Befestigungskonsole weist die Haltevorrichtung somit im geschlossenen Zustand eine flache Quaderform auf.

Nachteilig bei der bekannten Haltevorrichtung ist, daß ihr Träger und Halter in Zwei getrennten Betätigungsschritten eingeklappt werden müssen, die zudem in der richtigen Reihenfolge - zuerst der Halter, dann der Träger - vorgenommen werden müssen.

Eine weitere Schwenktischanordnung zum Beispiel für Flugzeugsitze ist aus der DE-A-3 942 629 (A1) bekannt. Bei dieser Vorrichtung (s. insbesondere Fig. 1) bilden die Ausstellarme, eine Tischplatte ein Haltearm und ein Verbindungsarm eine Mehrgelenkkette, die beim Ausklappen der Tischplatte dafür sorgt, daß durch die Relativbewegung zwischen den genannten Bauteilen der Haltearm in eine im wesentlichen vertikal nach oben ragende Position übergeführt und dort gehalten wird. Die horizontale Stellung der Plattenelemente 11, 13, die Schwenkbar am Haltearm angelenkt sind und als eigentliche Halter für einen Getränkebehälter dienen, wird durch geeignete Endanschläge gesichert. Dabei fallen die Plattenelemente durch ihr Eigengewicht in diese Stellung.

Davon ausgehend liegt der Erfindung die Aufgabe zugrunde, eine Haltevorrichtung der gattungsgemäßen Art so zu verbessern, daß der Bedienungskomfort bei ihrer Betätigung erhöht wird.

Die Lösung dieser Aufgabe ist im Kennzeichnungsteil des Patentanspruches 1 angegeben. Demnach wird der Halter durch seine gelenkige Verbindung mit dem Träger über mindestens einen Verbindungshebel derart zwangsbetätigt, daß er mit dem Ein- bzw. Ausklappen des Trägers selbsttätig in seine ein- bzw. ausgeklappte Stellung überführbar ist. Insofern kann also die gesamte Haltevorrichtung mit einem einzigen Betätigungsschritt ein- bzw. ausgeklappt werden. Eine Fehlbedienung ist praktisch nicht möglich. Hierbei ist anzumerken, daß bei einer Betätigung des Halters auch der Träger zumindest teilweise mit eingeklappt wird, so daß ein vollständiges Schließen der Haltevorrichtung durch eine weitere Betätigung des Trägers möglich ist, ohne daß die vorhergehenden Betätigungsschritte wieder rückgängig gemacht werden müßten.

Durch die Ausgestaltung der Haltevorrichtung nach Anspruch 2 ist es möglich, den Halter separat vom Träger einzuklappen, so daß der Träger von oben frei zugänglich ist und beispielsweise als Ablage für Kleinteile dienen kann. Dabei ist weiterhin von Vorteil, daß ausgehend von einer solchen Stellung von Halter und Träger nach dem Einklappen des Trägers dessen Schwenkarretierung mit dem Halter selbsttätig wieder in Eingriff gelangt. Bei einem anschließenden Ausklappen des Trägers wird also auch der Halter in seine ausgeklappte Stellung übergeführt. Die Haltevorrichtung wird damit automatisch mit ihrer Grundfunktion (gleichzeitiges Aus- und Einklappen von Träger und Halter) betätigt.

Nicht zuletzt wird durch die gemeinsame Lagerung des Trägers und Verbindungshebels auf einer Lagerachse eine besonders einfache Konstruktion erzielt.

In den Ansprüchen 3 und 4 sind vorteilhafte Weiterbildungen der lösbaren Schwenkarretierung zwischen dem Träger und dem mindestens einen Verbindungshebel angegeben.

Anspruch 5 kennzeichnet eine vorteilhafte Weiterbildung der Gelenkverbindung zwischen dem Halter und jedem Verbindungshebel. Durch die angegebene Anordnung des Dreh-Schiebe-Gelenks mit Abstand vom Anlenkpunkt des Halters bezüglich der Befestigungskonsole wird der Halter einerseits durch den Verbindungshebel in seiner ausgeklappten Stellung von unten unterstützt und andererseits insbesondere beim vom Träger getrennten Einklappen sauber geführt.

Durch die im Anspruch 6 angegebene schwenkbare Anlenkung des Halters an der Befestigungskonsole über mindestens einen Gelenkhebel kann der Anlenkpunkt des Halters beim Einklappen nach oben verschoben werden, wodurch alle Bauteile des Klappmechanismus inklusive dem Halter selbst in der eingeklappten Stellung eng aneinanderliegend angeordnet werden könne. Damit baut die erfindungsgemäße Haltevorrichtung im eingeklappten Zustand des Halters und des Trägers besonders kompakt.

Weitere Merkmale, Einzelheiten und Vorteile der Erfindung sind der nachfolgenden Beschreibung entnehmbar, in der ein Ausführungsbeispiel anhand der beiliegenden Figuren näher erläutert ist. Es zeigen
- Fig. 1 bis 3: Vertikalschnitte durch eine erfindungsgemäße Haltevorrichtung entlang der Schnittlinie I-I nach Fig. 4 in verschiedenen Klappositionen des Trägers und Halters,
- Fig. 4: einen Vertikalschnitt durch die Haltevorrichtung entlang der Schnittlinie IV-IV nach Fig. 2 und
- Fig. 5: eine teilweise Draufsicht auf die Haltevorrichtung gemäß Pfeilrichtung V nach Fig. 1.

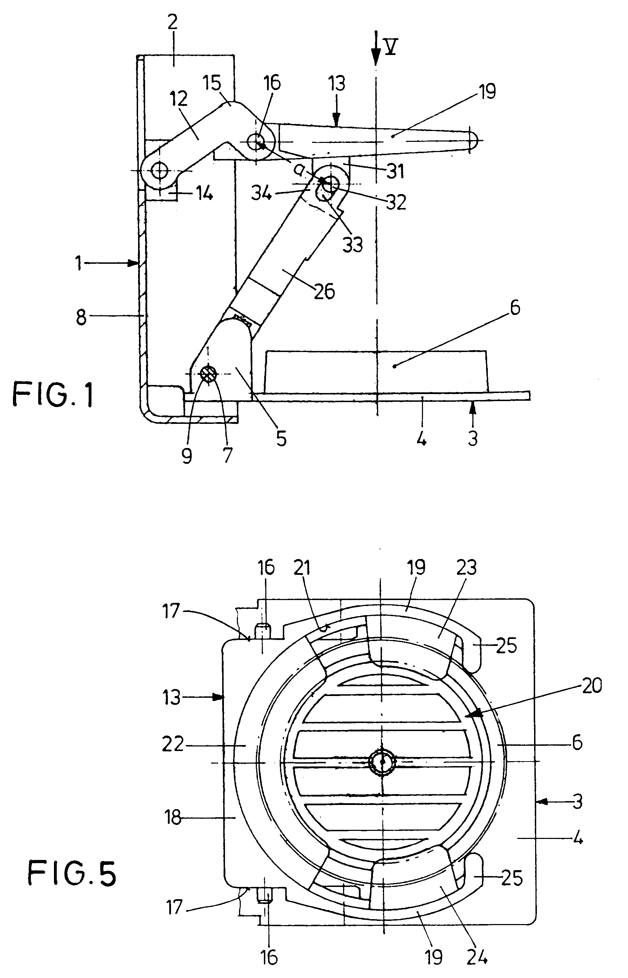

Wie aus den Fig. 1 bis 3 deutlich wird, weist eine erfindungsgemäße Haltevorrichtung eine im Vertikalschnitt etwa L-förmige Befestigungskonsole 1 auf, die seitlich von zwei Seitenwänden 2 begrenzt ist. Mittels der Befestigungskonsole 1 ist die Haltevorrichtung beispielsweise an einem Armaturenbrett eines Kraftfahrzeuges befestigbar.

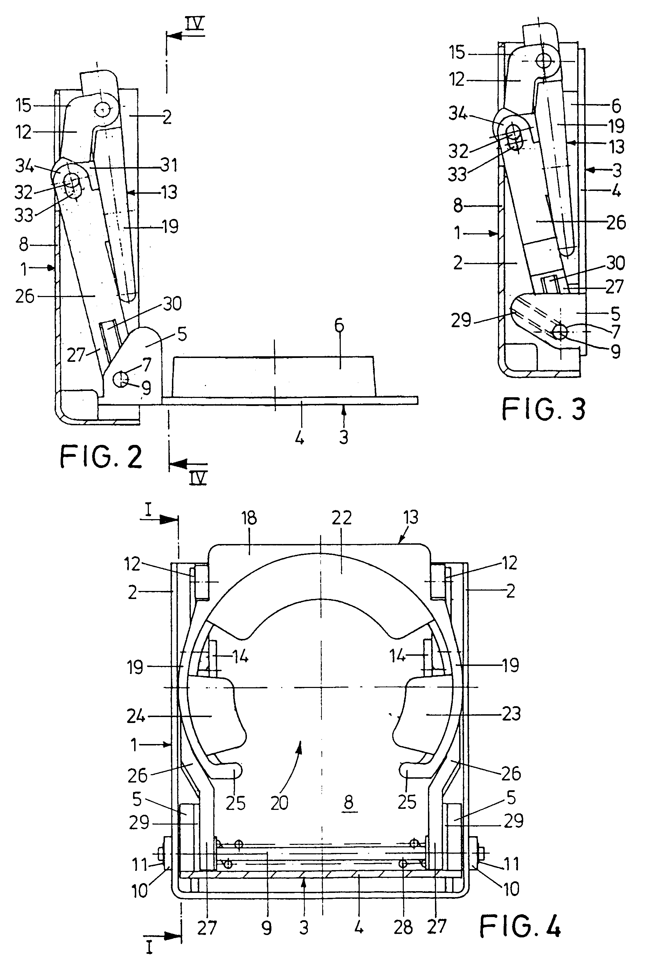

Im unteren Bereich der Befestigungskonsole 1 ist zwischen den beiden Seitenwänden 2 ein Träger 3 ausklappbar gelagert, der aus einer im ausgeklappten Zustand (Fig. 1, 2) horizontal angeordneten Platte 4 mit konsolenseitig daran angeordneten, parallel zu den Seitenwänden 2 verlaufenden Lageransätzen 5 und einer nach oben abstehenden, ringzylindrischen Wand 6 besteht. Im Bereich der Lageransätze 5 sind Lageraugen 7 vorgesehen, mittels denen der Träger 3 auf einer zwischen den beiden Seitenwänden 2 gelagerten, zur Rückwand 8 der Befestigungskonsole 1 parallelen Lagerachse 9 sitzt. Die Lagerachse 9 ist durch geeignete Mittel, wie beispielsweise Beilagscheiben 10 und davorgesetzte Sprengringe 11 gesichert. Der Träger 3 dient zur Aufnahme des Bodens eines Getränkebehälters.

Oberhalb des Trägers 3 ist über zwei in Seitenansicht miteinander fluchtende Gelenkhebel 12, die innerhalb der Seitenwände 2 parallel zu diesen angeordnet sind, der in Draufsicht (Fig. 4, 5) teilringförmige Halter 13 ebenfalls klappbar an der Befestigungskonsole 1 gelagert. Die Gelenkhebel 12 sind konsolenseitig an Lagerfortsätzen 14 angelenkt, die einstückig an die Rückwand 8 der Befestigungskonsole 1 angespritzt sind. Sie sind weiterhin winkelförmig ausgebildet, wobei in der ausgeklappten Stellung des Halters 13 (Fig. 1) ihr Scheitel 15 oberhalb des halterseitigen Anlenkpunktes der Gelenkhebel 12 angeordnet ist.

Die gelenkige Verbindung zwischen den Gelenkhebeln 12 und dem Halter 13 wird über seitliche Achsstummel 16 hergestellt, die von den kurzen, den Seitenwänden 2 zugewandten Außenflächen 17 eines Basisteiles 18 des Halters 13 abstehen. Die Achsstummel 16 sitzen in den entsprechenden Lageraugen der Gelenkhebel 12.

In der in den Fig. 1 und 5 gezeigten, ausgeklappten Stellung des Halters 13 dient dieser zum Umfassen und seitlichen Fixieren eines auf dem Träger 3 stehenden Getränkebehälters. Der Halter 13 weist dazu zwei in Draufsicht teilkreisförmige Haltearme 19 auf, die einstückig an die dem Achsstummel 16 benachbarten Enden des Basisteiles 18 angeformt sind. Die Haltearme 19 bilden gemeinsam mit dem Basisteil 18 eine teilkreisförmige Aufnahmeöffnung 20 für einen Getränkebehälter, die zu etwa 3/4 geschlossen ist. Auf seiner dem Getränkebehälter zugewandten Innenseite 21, die die Aufnahmeöffnung 20 umgrenzt, ist der Halter 13 mit drei nach innen abstehenden, weichelastischen Haltelappen 22, 23, 24 versehen, die in Draufsicht ringsektorförmig ausgestaltet sind. Der zentrale Haltelappen 22 erstreckt sich dabei im wesentlichen über die am Basisteil 18 verlaufende Umfangslänge der Aufnahmeöffnung 20. Die beiden anderen, kurzen Haltelappen 23, 24 sind vor den freien Enden 25 der Haltearme 19 angeordnet. Die Haltelappen 22, 23, 24 sind direkt an das Basisteil 18 bzw. die Haltearme 19 des Halters 13 angespritzt. Durch ihre Flexibilität können Getränkebehälter unterschiedlichen Durchmessers (s. durchgezogene, strichpunktierte bzw. strich-doppelpunktierte Kontur in Fig. 5) zuverlässig und klapperfrei mit Hilfe der erfindungsgemäßen Haltevorrichtung gehalten werden.

Wie aus den Fig. 1 bis 3 deutlich wird, sind zwei zusätzliche Verbindungshebel 26 zur gelenkigen Verbindung des Trägers 3 mit dem Halter 13 vorgesehen. Diese sind trägerseitig auf der Lagerachse 9 schwenkbar gelagert und liegen mit ihrem trägerseitigen Ende 27 an den einander zugewandten Innenseiten der Lageransätze 5 des Trägers 3 unter Einfluß der auf der Lagerachse 9 sitzenden Druckfeder 28 an. Zwischen dem Träger 3 und den beiden Verbindungshebeln 26 ist eine lösbare Schwenkarretierung durch eine Verrastung nach Art einer Nut-und-Feder-Verbindung vorgesehen, die durch eine die Feder bildenden Steg 29 an der Innenseite der Lageransätze 5 und eine entsprechende, die Nut bildende Ausnehmung 30 im trägerseitigen Ende 27 des Verbindungshebels 26 gebildet ist. Durch diese Nut-und-Feder-Verbindung sind der Träger 3 und die Verbindungshebel 26 schwenkgekoppelt.

Zur gelenkigen Verbindung des Verbindungshebels 26 mit dem Halter 13 ist im Bereich dessen Haltearme 19 rechtwinklig zu deren Erstreckungsrichtung (in ausgeklappter Stellung gemäß Fig. 1 nach unten) sich erstreckende Lageransätze 31 vorgesehen, die seitlich nach außen weisende Achsstummel 32 aufweisen. Diese greifen jeweils in ein Langloch 33 in den halterseitigen Enden 34 des Verbindungshebels 26 ein. Dadurch wird ein Dreh-Schiebe-Gelenk zwischen dem Verbindungshebel 26 und dem Halter 13 gebildet, das mit Abstand a vom Anlenkpunkt des Halters 13 bezüglich der Befestigungskonsole 1 - im Ausführungsbeispiel also von der Gelenkverbindung zwischen dem Gelenkhebel 12 und dem Basisteil 11 des Halters 13 - angeordnet ist. Insgesamt sind die Schwenkachsen des von dem Gelenkhebel 12, dem Halter 13, dem Verbindungshebel 26 und dem Träger 3 gebildeten Synchron-Klapp-Mechanismus parallel zur Rückwand 8 der Befestigungskonsole 1 ausgerichtet und so zueinander angeordnet, daß in der in Fig. 1 gezeigten ausgeklappten Stellung des Trägers 3 und des Halters 13 die Verbindungshebel 26 in einem Winkel von etwa 60° zur Horizontalen stehen.

Der Synchron-Klapp-Mechanismus funktioniert wie folgt:

Ausgehend von der in Fig. 1 gezeigten ausgeklappten Stellung des Trägers 3 und des Halters 13 können diese Bauteile durch ein Einschwenken des Trägers 3 gemeinsam in die in Fig. 3 gezeigte eingeklappte Stellung von Träger 3 und Halter 13 verbracht werden. Bei der Schwenkbewegung des Trägers 3 um einen Winkel von 90° um die Lagerachse 9 wird die Schwenkbewegung durch die Schwenkkopplung mittels der Nut-und-Feder-Verbindung mit dem Verbindungshebel 26 auf den Halter 13 übertragen, der dabei in gegenläufiger Richtung zum Träger 3 nach unten einwärts schwenkt, bis die Gelenkhebel 12, der Halter 13 selbst und der Verbindungshebel 26 etwa parallel zur Rückwand 8 der Befestigungskonsole 1 ausgerichtet sind. Diese Stellung wird erreicht, wenn der Träger 3 in einem Winkel von etwa 30° zur Horizontalen schräg nach oben steht. Bei einer weiteren Schwenkbewegung des Trägers 3 wird die Nut-und-Feder-Verbindung zwischen seinen Lageransätzen 5 und den Verbindungshebeln 22 durch ein Einwärtsdrücken der Verbindungshebel 26 gegen die Druckfeder 28 gelöst, der Träger 3 kann anschließend unabhängig von den Verbindungshebeln 26 in die in Fig. 3 gezeigte, eingeklappte, geschlossene Stellung verbracht werden. Beim Öffnen der Haltevorrichtung aus der in Fig. 3 gezeigten geschlossenen Stellung wird umgekehrt der Träger 3 erst um 60° aufgeklappt. In dieser Stellung verrasten die Lageransätze 5 mit den Verbindungshebeln 26 durch Schließen der Nut-und-Feder-Verbindung, wobei beim weiteren Ausschwenken des Trägers 3 in die in Fig. 1 gezeigte horizontale Stellung der Halter 13 unter entsprechendem Hochschwenken und Drehen um die sich nach unten auswärts verlagernden, halterseitigen Enden der Gelenkhebel 12 in die in Fig. 1 gezeigte, ausgeklappte Stellung schwenkt.

Der Halter 13 kann abweichend von der vorstehend erläuterten Funktionsweise auch losgelöst vom Träger 3 eingeklappt werden, wie dies in Fig. 2 dargestellt ist. Dazu wird der Träger 3 festgehalten und der Halter 13 einwärtsgeschwenkt. Diese Schwenkbewegung wird auf die Verbindungshebel 26 übertragen, wodurch die Nut- und Feder-Verbindung mit den Lageransätzen 5 des Trägers 3 gelöst und die Verbindungshebel 26 ebenfalls einwärtsgeschwenkt werden. In der in Fig. 2 gezeigten Stellung kann der Träger 3 zur Ablage von Kleinteilen - etwa innerhalb der ringzylindrischen Wand 6 - dienen. Ausgehend von dieser Stellung kann der Träger 3 losgelöst von den übrigen Bauteilen des Synchron-Klappmechanismus in die in Fig. 3 gezeigte geschlossene Lage eingeschwenkt werden.

## Patentansprüche

1. Haltevorrichtung für Getränkebehälter insbesondere zur Anbringung in Fahrzeugen mit
- einer Befestigungskonsole (1),
- einem daran gelagerten Träger (3), der zwischen einer aus- und eingeklappten Stellung zur Aufnahme des Bodens des Getränkebehälters verschwenkbar an der Befestigungskonsole (1) gelagert ist, und
- einem im wesentlichen zumindest teilringförmigen, die Seitenwand des Getränkebehälters umfassenden Halter (13), der oberhalb des Trägers (3) an der Befestigungskonsole (1) zwischen einer ausgeklappten Stellung zur Halterung des Getränkebehälters und einer eingeklappten Stellung verschwenkbar gelagert ist, wobei der Halter in seiner eingeklappten Stellung vom Träger deckelartig abgedeckt ist,
dadurch gekennzeichnet,
daß der Träger (3) und der Halter (13) über einen oder zwei den Seiten des Trägers (3) jeweils zugeordnete Verbindungshebel (26) derart gelenkig miteinander verbunden sind, daß der Halter (13) mit dem Ein- bzw. Ausklappen des Trägers (3) selbsttätig in seine ein- bzw. ausgeklappte Stellung überführbar ist.

2. Haltevorrichtung nach Anspruch 1, dadurch gekennzeichnet, daß der Träger (3) und jeder Verbindungshebel (26) auf einer gemeinsamen Lagerachse (9) schwenkbar an der Befestigungskonsole (1) gelagert und über eine lösbare Schwenkarretierung (29, 30) schwenkgekoppelt sind.

3. Haltevorrichtung nach Anspruch 2, dadurch gekennzeichnet, daß die lösbare Schwenkarretierung durch eine Verrastung nach Art einer Nut- und Feder-Verbindung (29, 30) zwischen jedem Verbindungshebel (26) und jeweils zugeordneten, die gemeinsame Langerachse (9) aufnehmenden Lageransätzen (5) am Träger (3) gebildet ist.

4. Haltevorrichtung nach Anspruch 2 und 3, dadurch gekennzeichnet, daß jeder Verbindungshebel (26) in Rastrichtung federbelastet (28) ist.

5. Haltevorrichtung nach einem der Ansprüche 1 bis 4, dadurch gekennzeichnet, daß jeder Verbindungshebel (26) über ein Dreh-Schiebegelenk (32, 33) mit dem Halter (13) verbunden ist, das mit Abstand (a) vom Anlenkpunkt des Halters (13) bezüglich der Befestigungskonsole (1) an diesem angeordnet ist.

6. Haltevorrichtung nach einem der Ansprüche 1 bis 5, dadurch gekennzeichnet, daß der Halter (13) über mindestens einen Gelenkhebel (12) schwenkbar an der Befestigungskonsole (1) angelenkt ist.

## Claims

1. Holding device for drink containers in particular for being installed in vehicles with
- a fastening panel (1),
- a tray (3) supported thereto, which is supported on the fastening panel (1) to pivot between a folded-out and a retracted position for receiving the bottom of the drink container, and
- a holder (13), which is substantially at least partially annularly shaped and which grasps the side wall of the drink container, which holder (13) is supported above the tray (3) on the fastening panel (1) to pivot between a folded-out position for holding the drink container and a retracted position, the holder, in its retracted position, being covered by the tray in the way of a lid,
characterized in that
the tray (3) and the holder (13) are articulated to each other via a connecting lever (26) or two connecting levers (26) each allocated to a side of the tray (3) in such a manner that with
the retracting and folding out movement, respectively, of the tray (3), the holder (13) is automatically movable into its retracted and folded-out position, respectively.

2. Holding device according to claim 1, characterized in that the tray (3) and each of the connecting levers (26) are pivotably supported on the fastening panel (1) on a common bearing axle (9) and are pivotably coupled via releasable pivot locking means (29, 30).

3. Holding device according to claim 2, characterized in that the releasable pivot locking means are formed by snap engagement in the way of a groove-and-tongue-coupling (29, 30) between each connecting lever (26) and respectively associated bearing projections (5) on the tray (3), which receive the common bearing axle (9).

4. Holding device according to claims 2 and 3, characterized in that each connecting lever (26) is spring-loaded (28) in the locking direction.

5. Holding device according to one of claims 1 to 4, characterized in that each connecting lever (26) is connected with the holder (13) via a rotary-slide-joint (32, 33), which is disposed on the holder (13) at a distance (a) from the point of articulation of the latter relative to the fastening panel (1).

6. Holding device according to one of claims 1 to 5, characterized in that the holder (13) is pivotably articulated to the fastening panel (1) via at least one articulated lever (12).

## Revendications

1. Dispositif de support d'un réceptacle de boisson, notamment pour l'attachage à des véhicules, comportant
- une console de fixation (1),
- un plateau (3), qui est logé sur la console de fixation (1) de façon pivotante entre une position rétractée et une position dépliée pour le logement du fond du réceptacle de boisson, et
- un reteneur (13) essentiellement au moins partiellement annulaire, qui entoure la paroi latérale du réceptacle de boisson et qui est logé sur la console de fixation (1) au-dessus du plateau (3) de façon pivotante entre une position dépliée pour retenir le réceptacle de boisson et une position rétractée, le reteneur, dans sa position rétractée, étant couvert par le plateau en sorte d'un couvercle.
caractérisé en ce que
le plateau (3) et le reteneur (13) sont articulés l'un à l'autre par la voie d'un levier de raccord (26) ou de deux leviers de raccord (26), chacun d'eux conjugué à un côté du plateau (3), de telle sorte que le reteneur (13) soit automatiquement transférable dans sa position rétractée ou dépliée par la rétraction ou le dépliage du plateau (3).

2. Dispositif de support selon la revendication 1, caractérisé en ce que le plateau (3) et chaque levier de raccord (26) sont logés sur la console de fixation (1) de façon pivotante sur un axe commun de palier (9) et couplés de façon pivotante par la voie d'un arretage pivotant (29,30) détachable.

3. Dispositif de support selon la revendication 2, caractérisé en ce que l'arretage pivotant détachable est formé par un enclenchement du type d'un assemblage à rainure et languette (29, 30) entre chaque levier de raccord (26) et des saillies de palier (5) respectivement conjugées, qui sont arrangées sur le plateau (3) et logent l'axe commun de palier (9).

4. Dispositif de support selon la revendication 2 et 3, caractérisé en ce que chaque levier de raccord (26) est chargé par ressort (28) en sens d'enclenchement.

5. Dispositif de support selon l'une quelconque des revendications 1 à 4, caractérisé en ce que chaque levier de raccord (26) est raccordé au reteneur (13) par la voie d'une articulation tournante et coulissante (32,33), qui est arrangée sur le reteneur (13) à une distance (a) du point d'articulation de celui-ci par rapport à la console de fixation (1).

6. Dispositif de support selon l'une quelconque des revendications 1 à 5, caractérisé en ce que le reteneur (13) est articulé à la console de fixation (1) de façon pivotante par la voie d'au moins un levier articulé (12).
